# EUROPEAN PATENT SPECIFICATION

(11) **EP 2 859 228 B1**
(45) Date of publication and mention of the grant of the patent: **27.02.2019**
(21) Application number: 13728946.8
(22) Date of filing: 06.06.2013
(51) Int. Cl.: F03D 80/80

(54) **TOWER CABLE ARRANGEMENTS FOR WIND TURBINES**
TURMKABELANORDNUNGEN FÜR WINDTURBINEN
AGENCEMENTS DE CÂBLE DE TOUR POUR TURBINES ÉOLIENNES

(30) Priority: 07.06.2012 DK 201270307; 08.06.2012 US 201261657326 P
(43) Date of publication of application: 15.04.2015
(73) Proprietor: Vestas Wind Systems A/S, 8200 Aarhus N (DK)
(72) Inventor: FRISENETTE, Anders G., DK-8550 Ryomgård (DK); VERA, María Castañeda, DK-8000 Århus C (DK); GRØNBÆK, Kristian Strand, DK-8751 Gedved (DK)
(74) Representative: Vestas Patents Department
(86) International application number: PCT/DK2013/050171
(87) International publication number: WO 2013/182199

(56) References cited:
- WO-A1-2010/108538
- WO-A2-2010/081758
- US-A1- 2003 147 753

## Description

### Technical Field

The present invention relates generally to wind turbines, and specifically to devices for supporting cables in a wind turbine, and associated methods for installing cables in a wind turbine.

### Background

A typical wind turbine comprises a vertical tower that supports a nacelle at its upper end. A rotor having a plurality of blades is mounted to the nacelle. The nacelle is able to turn relative to the tower about a vertical yaw axis in order to position the rotor optimally according to the direction of the prevailing wind. The nacelle typically houses a generator amongst other electrical equipment. The nacelle may also house a gearbox.

The towers of modern wind turbines may be more than 100 metres tall. It will therefore be appreciated that very long connecting cables are required to connect the equipment inside the nacelle to equipment located at or near the base of the tower, referred to herein as down-tower equipment'. Usually a bundle of cables is suspended inside the tower for this purpose. The bundle generally comprises several electrical cables for connecting the generator in the nacelle to down-tower equipment such as a converter and a transformer. The bundle may also include one or more low-voltage cables for powering auxiliary equipment inside the nacelle such as lighting circuits, and one or more data cables.

The bundle of cables are routed through an opening at the top of the tower to the equipment inside the nacelle. The cables are secured to cable trays attached to a base plate of the nacelle. These cable trays typically have a wire mesh structure. Access to the cable trays is generally severely restricted inside the nacelle and installing the cables in such a confined space is a difficult and potentially hazardous task. It will be appreciated that the cables themselves are extremely heavy, and difficult to manipulate, so special lifting equipment is required to assist with the installation. Further down the tower, the bundle of cables may be secured to a service ladder that is mounted to an inside wall of the tower. In an upper part of the tower, between the nacelle and the ladder, the bundle of cables generally hangs freely in the centre of the tower.

As the nacelle turns about the yaw axis, the cables in the bundle twist. Generally, wind turbines are designed to allow the nacelle to turn by several complete revolutions clockwise and anticlockwise. It is important that the cables do not become strained or entangled inside the tower when the nacelle turns, otherwise the cables could become damaged, which reduces the lifetime and performance of the cables and may present an electric shock hazard. In view of the potential risks associated with damaged cables, it will be appreciated that securing high voltage cables to safety equipment such as the service ladder is undesirable.

Against this background, it is desirable to improve the system for supporting cables inside a wind turbine tower to facilitate installation and for increased safety.

WO2010081758A2 describes a wind turbine comprising a slip ring assembly.

### Summary of the present invention

According to a first aspect of the present invention, there is provided a wind turbine as described in claim 1.

The cable tube provides a predefined pathway for routing the plurality of cables from the tower to the nacelle, and facilitates the installation process by avoiding the need to fix the cables to cable trays in the nacelle base plate, which are difficult to access in the confined space at the top of the tower. The cable tubes are preferably mounted to the base plate of the nacelle. As the cable tubes support the weight of the cables, the process of installing the cables requires less effort than prior art methods and essentially involves pulling each cable through respective tubes.

The plurality of cables may comprise one or more electrical cables and one or more data cables. Preferably each cable is routed through a respective cable tube, although it will be appreciated that multiple cables could be routed through the same cable tube in other embodiments.

The cables may connect electrical equipment such as the generator inside the nacelle to equipment such as a converter and a transformer located down the tower. The down-tower equipment may be located either inside or outside the tower. If located inside the tower, the equipment may be located at the base of the tower, or on a platform raised above the base of the tower, or even further up the tower.

Each tube preferably includes a substantially vertical first section, which includes an entrance end through which the cable enters the tube from the tower. The first section of the tube may extend into the tower. Each tube may have a substantially horizontal second section, which includes an exit end through which the cable exits the tube at the nacelle. The second section of each tube is preferably secured to the nacelle. Each tube may be curved between the first and section sections. The second section of each tube may be curved in a substantially horizontal plane in order to direct the cable towards equipment inside the nacelle to which the cable connects. Preferably the curvature of the tube is relatively gentle otherwise it could make it difficult to route the cables through the tubes. An advantage of making the tubes from metal is that the tubes may be bent to the required shape from a straight section of tubing.

The first sections of the respective tubes are preferably arranged about a common axis such that they are equidistant from the axis and regularly spaced from each other. The second sections of the respective tubes are preferably arranged side-by-side substantially in a horizontal plane.

Within the present inventive concept, there is also provided a cable tube as described above.

In a lower section of the tower, each cable is preferably supported by one or more brackets that attach to a wall of the tower by means of magnetic attraction.

Whereas in the prior art, the cables are often attached to the safety ladder, the present invention couples the cables to the wall of the tower by independent means. The cables are therefore separated from the safety ladder. The use of magnets to attach the brackets to the tower means that no bolts or other fixings are required. Consequently, there is no requirement to penetrate the wall of the tower and so the structure of the tower is not compromised. Installation of the brackets is also straightforward as it does not require any holes to be drilled in the tower wall. Consequently, cable installation can be performed more quickly. Furthermore, whereas in the prior art if the bracket is mounted incorrectly it would damage the tower and require repair prior to reinstallation. The magnetic attachment of the present invention allows the bracket to be easily removed, reoriented or reused as required without causing damage to the tower and without requiring repair.

Generally a plurality of cables are connected between equipment inside the nacelle and down-tower equipment. The or each bracket may comprise a plurality of cable clamps associated respectively with the plurality of cables. The cable clamps may be made of electrically insulating material. The bracket is preferably arranged to space the cables apart from the wall of the tower. Accordingly, in the unlikely event that the cables become damaged, they are isolated from the tower wall, which results in increased safety. The cable clamps are preferably suitably arranged to space the cables relative to one another by a predetermined distance. The predetermined distance may be selected to minimise or substantially to avoid unwanted electromagnetic interactions from occurring between the cables.

Each cable is preferably arranged close to the wall of the tower in a lower section of the tower, and close to the central vertical axis of the tower in an upper section of the tower. Preferably the cables are routed over a cable support that serves to direct the cables from the wall of the tower towards the centre of the tower. In preferred embodiments of the present invention, the cable support is in the form of a hump. The hump may be attached to the wall of the tower. In preferred embodiments, the hump has a half-cylindrical outer surface on which the cables are supported. Preferably the cables are arranged side by side on the hump. The cables are preferably located in respective channels defined in the surface of the hump. The cables are preferably attached to the hump by respective cable clamps. The cables are preferably spaced apart from each other on the hump by a predetermined distance in order to avoid unwanted electromagnetic interactions between the cables.

In the upper section of the tower, between the cable tubes and the hump, the cables preferably extend vertically and substantially centrally inside the tower, i.e. close to the central vertical axis of the tower. The wind turbine preferably further comprises one or more cable spacers in this region for maintaining the cables at a fixed separation from each other and for preventing the cables from touching or becoming tangled when the nacelle turns. Preferably the or each cable spacer comprises a body and a plurality of cable clamps provided around a perimeter of the body. In a specific example described later, there are seven cables and the body of the cable spacer is heptagonal with a cable clamp provided at each of the seven sides. The cables are attached to the body by a respective cable clamp. In other embodiments the cable spacer may have any other suitable shape. Preferably the cable spacer spaces the cables equidistantly about a central vertical axis, for example a central axis extending perpendicular to the plane of the heptagonal body in the specific example described later.

One of the cable spacers is preferably attached to the hump. The coupling between the hump and the cable spacer preferably allows the cable spacer to move vertically when the nacelle turns about the central vertical axis, so as to accommodate the effective shortening or lengthening of the vertical section of cables between the hump and the cable tubes when the nacelle turns about the yaw axis. To this end, the cable spacer may be connected to the hump via one or more arms that are pivotally connected to the hump. Preferably each cable includes a portion of slack between the hump and the cable spacer attached to the hump. The portion of slack prevents the cables from becoming strained when the nacelle turns. Sufficient slack is preferably provided to accommodate up to four complete revolutions of the nacelle in both clockwise and anticlockwise directions.

The novel system for suspending wind turbine cables described above facilitates installation of the cables. The cable tubes in particular greatly facilitate installation of the cables at the top of the tower, which has previously been the most difficult part of the installation process.

Accordingly, the invention also provides a method of installing a plurality of cables in a wind turbine as described in claim 11.

The process of routing the cable through the cable tube can be facilitated by feeding an elongate member through the cable tube such that a first end of the elongate member protrudes from a first end of the cable tube; attaching an end of the cable to the protruding first end of the elongate member; and pulling a second end of the elongate member until the first end of the cable emerges from a second end of the cable tube.

The magnetic brackets provided lower down the tower for attaching the cables to the wall of the tower also greatly facilitate installation as already mentioned above because no permanent fixings are required.

### Brief description of the drawings

In order that the present invention may be more readily understood, embodiments of the invention will now be described, by way of non-limiting example, with reference to the accompanying drawings, in which:
Figure 1 shows a cable support system inside a wind turbine tower in accordance with the present invention;
Figure 2 shows a magnetic bracket of the cable support system of Figure 1.
Figure 3 shows a cable support hump of the cable support system of Figure 1;
Figure 4 shows a cable spacer of the cable support system of Figure 1;
Figure 5 shows a set of cable tubes of the cable support system of Figure 1; and
Figures 6(a) to 6(c) show a series of steps involved in routing cables through the cable tubes of Figure 5.

### Detailed description

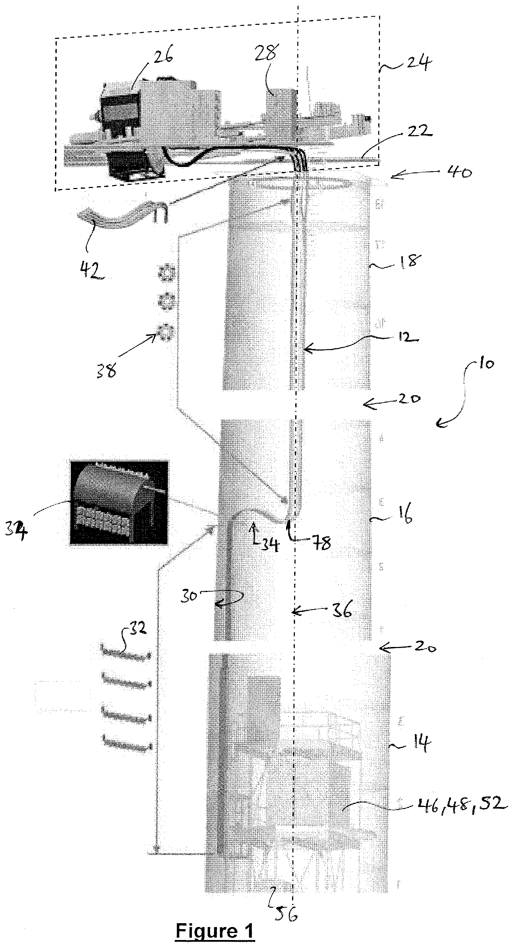

Referring to Figure 1, a wind turbine tower 10 is shown schematically and semi-transparently such that a plurality of cables 12 and a cable support system inside the tower 10 can be seen. The tower 10 comprises three sections: a lower section, 14 a middle section 16 and an upper section 18. In this example, the tower 10 is approximately one hundred metres tall, and for reasons of clarity, discontinuities 20 are shown in Figure 1 between these sections 14, 16, 18, whereas in reality these sections would be longer. A base plate 22 of a nacelle 24 (shown schematically by a dashed box in Figure 1) is located at the top of the tower 10, and a generator 26 is supported on the base plate 22 along with other equipment 28 such as electrical breakers and control cabinets.

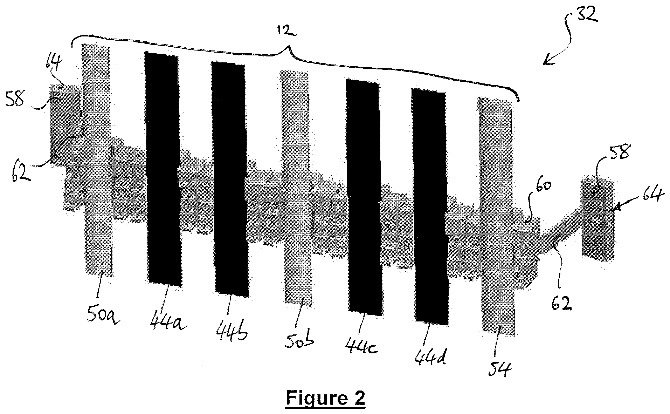

The cable support system comprises various devices for supporting the cables 12, which are associated with the various sections 14, 16, 18 of the tower 10. Briefly, in the lower section 14 and part of the middle section 16 of the tower 10 the cables 12 are attached to an inner wall 30 of the tower 10 by a set of magnetic brackets 32. In the middle section 16 of the tower 10, the cables 12 are fed over a half-cylindrical hump 34, which serves to support the weight of the cables 12 and directs the cables 12 towards a central vertical axis 36 of the tower 10. Above the hump 34, in the middle and upper sections 16, 18 of the tower 10, the cables 12 are arranged vertically and centrally inside the tower 10, and are spaced relative to one another by a set of cable spacers 38, which are vertically spaced apart relative to each other. Whilst at an upper end 40 of the tower 10, the cables 12 are routed through a set of rigid cable tubes 42, which support the weight of the cables 12 and direct the cables 12 towards the equipment 26, 28 to which they connect inside the nacelle 24. The devices 32, 34, 38, 42 are described in further detail below with reference to Figures 2 to 5.

Referring additionally to Figure 2, which shows a magnetic bracket 32, the plurality of cables 12 includes four medium-voltage electrical cables 44a-44d, which are connected between the generator 26 inside the nacelle 24, and a converter 46 and transformer 48 located in the lower section 14 of the tower 10. The plurality of cables 12 also includes two low-voltage auxiliary cables 50a, 50b for providing power to auxiliary equipment such as lighting inside the nacelle 24. The auxiliary cables 50a, 50b are connected between an auxiliary transformer (not shown) at the base of the tower 10 and the auxiliary equipment in the nacelle 24. Further, the plurality of cables 12 includes a communications cable 54, which is connected between control equipment 56 inside the base of the tower 10 and equipment inside the nacelle 24. The electrical cables 12 in this example have a diameter of approximately eighty millimetres, and given the height of the tower 10, it will be appreciated that the cables 12 are very heavy.

The bracket 32 comprises a pair of mounts 58, to which a set of cable clamps 60 is attached via a pair of arms 62. There are seven clamps in this example, one for each cable, although it will be appreciated that any other number of clamps may be provided in other examples to suit the number of cables. The cable clamps 60 are arranged side by side such that the respective cables 12 are arranged side by side close to the wall 30 of the tower 10, and separated from each other by a fixed distance, which is governed by the size and the respective separation between adjacent cable clamps 60. The distance between the cables is sufficient to allow heat dissipation from the cables and to prevent electrical interference between the cables. The arms 62 serve to space the set of cables 12 apart from the wall 30 of the tower 10, so that the cables 12 do not touch the wall 30 of the tower 10. The mounts 58 each include a magnet 64, which conveniently allows the bracket 32 to be magnetically attached to the wall 30 of the tower, which is made from steel, without the requirement for bolts or other fixings that would penetrate the tower 10.

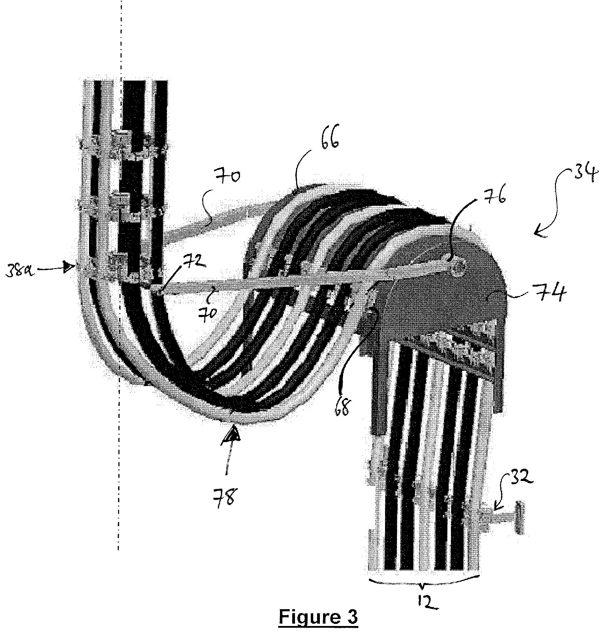

Referring now to Figure 3, this shows the hump 34 that is located in the middle section 16 of the tower 10. Referring additionally to Figure 1, the hump 34 serves to guide the cables 12 from near the wall 30 of the tower 10 where they are supported by the magnetic brackets 32, towards the central vertical axis 36 of the tower 10. The cables 12 are routed over the cylindrical outer surface 66 of the hump 34 and arranged side-by-side on the hump 34. Each cable 12 is attached to the hump 34 by a series of cable clamps 68. The hump 34 itself is mounted to the wall 30 of the tower 10, and a pair of arms 70 extends from the hump 34 towards the central vertical axis 36 of the tower 10. A first end 72 of each arm 70 is pivotally attached to a respective half-circular end 74 of the hump 34, and a second end 76 of each arm 70 is attached to the lowest cable spacer 38a.

As the nacelle 24 turns about the yaw axis, which in this example is substantially coincident with the central vertical axis 36 of the tower 10, the centrally-located section of cables 12 between the cable tubes 42 and the hump 34 twists, which causes the effective length of this section of cables to shorten or lengthen depending upon the position of the nacelle 24. This in turn causes the arms 70 to pivot relative to the hump 34 as the cables 12 move vertically within the tower 10. The length of the cables 12 between the hump 34 and the cable tubes 42 is greater than the vertical distance between the hump 34 and the cable tubes 42 so that a portion of slack 78 is introduced in the cables 12 adjacent to the hump 34. Specifically, the portion of slack 78 is between the hump 34 and the lowest cable spacer 38a. The portion of slack 78 is sufficient to accommodate the effective shortening of the cables 12 that occurs when the nacelle 24 turns.

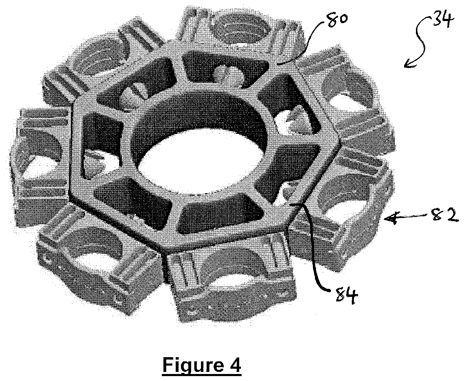

Referring to Figure 1, the cable spacers 38 in the upper and middle sections 18, 16 of the tower 10 serve to keep the respective cables 12 separate and to prevent the cables 12 from becoming entangled as the nacelle 24 turns about the yaw axis 36. Referring additionally to Figure 4, in this example the cable spacers 34 have a heptagonal body 80, and seven cable clamps 82 are attached respectively to the seven sides 84 of the body 80 for clamping the respective cables 12. The shape of the cable spacer 34 results in the cables 12 being equidistant from, and equally spaced about, the central vertical axis 36 of the tower 10.

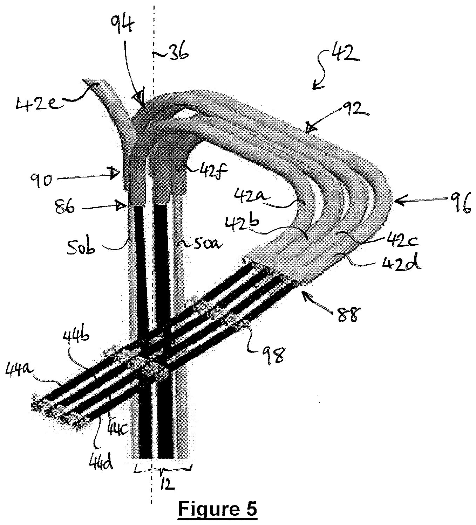

Referring to Figure 5, this shows the cable tubes 42 at the top of the tower 10, which are mounted to the nacelle base plate 22 shown in Figure 1. The cable tubes 42 are made from stainless steel and are rigid so as to support the weight of the cables 12. The tubes 42 also serve to shield the cables 12 and prevent electromagnetic interference between the cables 12. Six cable tubes 42 are provided in this example, one tube 42 for each of the electrical cables 44a-44d, 50a, 50b. The data cable 54 comprises one or more optical fibres cables, which are much smaller and lighter than the electrical cables and do not present a routing problem. Accordingly, the data cable 54 does not require its own cable tube. Four cable tubes 42a-42d are associated respectively with the four medium-voltage electrical cables 44a-44d, and serve to route these cables 44a-44d towards the generator 26, and two cable tubes 44e, 44f are associated respectively with the auxiliary cables 50a, 50b, and serve to route these cables 50a, 50b towards auxiliary equipment inside the nacelle 24.

Each cable tube 42a-42f comprises an entrance end 86 and an exit end 88. The cables 12 are routed from the tower 10 through the entrance end 86 of the respective tubes 42a-42f, and out through the respective exit ends 88 to the generator 26 or to the auxiliary equipment inside the nacelle 24. Each tube 42a-42f has a substantially vertical first section 90 that includes the entrance end 86, and a substantially horizontal second section 92 that includes the exit end 88. The vertical sections 90 of the respective tubes 42a-42f are arranged such that they are substantially equidistant from the central vertical axis 36 of the tower 10, i.e. to correspond to the spacing of the cables 12 introduced by the cable spacers 34 shown in Figure 4.

The tubes 42a-42f include a first region of curvature 94 between the vertical first sections 90 and the horizontal second sections 92. The horizontal sections 92 of the tubes 42a-42f are attached to the nacelle base plate 22. Referring to the four cable tubes 42a-42d for the medium-voltage cables 44a-44d, the second sections 92 of these tubes 42a-42f are arranged side by side in a substantially horizontal plane, i.e. a plane that is substantially parallel to the plane of the nacelle base plate 22. Each of four tubes 42a-42d includes a second region of curvature 96 in the horizontal plane, which serves to direct the exit ends 88 of the respective tubes 42a-42d towards the generator 26.

Between the generator 26 and the exit ends 88 of the cable tubes 42a-42d, the cables 44a-44d are secured to cable trays (not shown) inside the nacelle 24 by cable supports 98. These cable trays are relatively easy to access inside the nacelle 24 and since the cable tubes 42a-42d support the weight of the cables 44a-44d, the process of securing the cables 44a-44d to these cable tubes 42a-42d is relatively easy and does not require specialist lifting equipment. In the prior art, the cables are secured to cable trays along the entire length of the cables inside the nacelle. As explained by way of background, some of these cable trays are very difficult to access within the confined space of the nacelle and the weight of the cables makes installing the cables in this way a very difficult task.

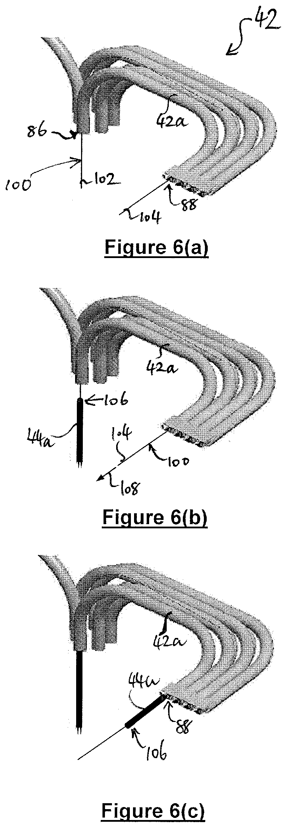

The cable tubes 42a-42f serve to simplify installation of the cables 12 at the top of the tower as will now be described with reference to Figures 6(a) to 6(c). Referring to Figure 6(a), a long steel wire 100 is initially routed through a respective cable tube 42a so that a first end 102 of the wire 100 extends from the entrance end 86 of the cable tube 42a and a second end 104 of the wire 100 extends from the exit end 88 of the cable tube 10. As shown in Figure 6(b), a cable 44a is then lifted up inside the tower 10, and an end 106 of the cable 44a is attached to the first end 102 of the steel wire 100. The second end 104 of the steel wire 100 is then pulled in the direction of the arrow 108, until the end 106 of the cable 44a has been routed all the way through the cable tube 42a and out through the exit end 88, as shown in Figure 6(c). At this point, the steel wire 100 may be detached from the cable 44a, and the cable 44a itself may be pulled through the tube 42a until the required length of cable protrudes from the exit end 88.

Installation of the cables 12 through the cable tubes 42 may be performed by one engineer at the top of the tower 10, but for increased speed, two engineers may work at the respective ends 86, 88 of the tubes 42, with the first engineer securing the cables 12 to the first end 102 of the steel wire 100 and feeding the cables 21 through the entrance ends 86 of the tubes 42, and the second engineer pulling the second end 108 of the steel wire 100 in order to pull the cables 12 through the tubes 42.

Various modifications may be made to the specific examples described above without departing from the scope of the present invention as defined by the accompanying claims. For example, whilst seven tower cables 12 are described in the above examples, any other number of cables 12 may be installed in the tower 10, and features of the various devices such as the size and shape of the devices and/or the number of clamps associated with the devices may be selected as appropriate.

## Claims

1. A wind turbine comprising:
a tower (10);
a nacelle (24) supported at an upper end (18) of the tower; and
a plurality of cables (12) extending inside the tower, each cable serving to connect equipment inside the nacelle with equipment located down the tower,
wherein the wind turbine further comprises a plurality of cable tubes (42) mounted to the nacelle, wherein each cable is routed through a respective cable tube between the tower and the nacelle, and each tube is made from stainless steel and configured to support the weight of each cable, wherein the tubes serve to shield the cables and prevent electromagnetic interference between the cables.

2. The wind turbine of claim 1, wherein the cable tube is mounted to a base plate of the nacelle.

3. The wind turbine of any preceding claim, wherein each cable tube has a substantially vertical first section (90) including an entrance end (86) through which the respective cable enters the tube from the tower, and a substantially horizontal second section (92) mounted to the nacelle and including an exit end (88) through which the cable exits the tube at the nacelle.

4. The wind turbine of claim 3, wherein each cable tube is curved between the first and second sections and the second section of each cable tube is further curved in a substantially horizontal plane.

5. The wind turbine of claim 3 or 4, wherein the first sections of the respective tubes are arranged about a common axis such that they are equidistant from said common axis and regularly spaced from each other.

6. The wind turbine of claim 3, 4 or 5, wherein the second sections of the respective tubes are arranged side-by-side substantially in a horizontal plane.

7. The wind turbine of any preceding claim, wherein in a lower section of the tower, each cable is supported by one or more brackets (32) that attach to a wall (30) of the tower by means of magnetic attraction.

8. A method of installing a plurality of cables (12) in a wind turbine, the wind turbine having a tower (10) and a nacelle (24) supported at an upper end (18) of the tower, wherein the method comprises routing the plurality of cables between the tower and the nacelle through a plurality of respective cable tubes (42) mounted to the nacelle, made from stainless steel and configured to support the weight of the cable, wherein the tubes serve to shield the cables and prevent electromagnetic interference between the cables.

9. The method of Claim 8, comprising feeding an elongate member through the cable tube such that a first end of the elongate member protrudes from a first end of the cable tube; attaching an end of the cable to the protruding first end of the elongate member; and pulling a second end of the elongate member until the first end of the cable emerges from a second end of the cable tube.

## Patentansprüche

1. Windturbine, umfassend:
einen Turm (10);
eine an einem oberen Ende (18) des Turms getragene Gondel (24); und
eine Vielzahl von Kabeln (12), die sich innerhalb des Turms erstrecken, wobei jedes Kabel dazu dient, Geräte innerhalb der Gondel mit Geräten, die unten im Turm positioniert sind, zu verbinden,
wobei die Windturbine weiter eine Vielzahl von Kabelrohren (42) umfasst, die an der Gondel montiert sind, wobei jedes Kabel durch ein entsprechendes Kabelrohr zwischen dem Turm und der Gondel geführt ist, und jedes Rohr aus Edelstahl hergestellt und konfiguriert ist, um das Gewicht jedes Kabels zu tragen, wobei die Rohre dazu dienen, die Kabel abzuschirmen und elektromagnetische Interferenz zwischen den Kabeln zu verhindern.

2. Windturbine nach Anspruch 1, wobei das Kabelrohr auf einer Grundplatte der Gondel montiert ist.

3. Windturbine nach einem der vorstehenden Ansprüche, wobei jedes Kabelrohr einen im Wesentlichen vertikalen ersten Abschnitt (90) aufweist, der ein Eingangsende (86) enthält, durch das das jeweilige Kabel vom Turm in das Rohr eintritt, und einen im Wesentlichen horizontalen zweiten Abschnitt (92), der an der Gondel montiert ist und ein Ausgangsende (88) enthält, durch das das Kabel an der Gondel aus dem Rohr austritt.

4. Windturbine nach Anspruch 3, wobei jedes Kabelrohr zwischen dem ersten und dem zweiten Abschnitt gekrümmt ist, und der zweite Abschnitt jedes Kabelrohrs in einer im Wesentlichen horizontalen Ebene weiter gekrümmt ist.

5. Windturbine nach Anspruch 3 oder 4, wobei die ersten Abschnitte der jeweiligen Rohre um eine gemeinsame Achse angeordnet sind, sodass sie von der gemeinsamen Achse gleichweit entfernt und voneinander regelmäßig beabstandet sind.

6. Windturbine nach Anspruch 3, 4 oder 5, wobei die zweiten Abschnitte der jeweiligen Rohre Seite an Seite in einer im Wesentlichen horizontalen Ebene angeordnet sind.

7. Windturbine nach einem der vorstehenden Ansprüche, wobei in einem unteren Abschnitt des Turms jedes Kabel von einem oder mehreren Bügeln (32) getragen wird, die mittels magnetischer Anziehung an einer Wand (30) des Turms befestigt sind.

8. Verfahren zum Installieren einer Vielzahl von Kabeln (12) in einer Windturbine, wobei die Windturbine einen Turm (10) und eine an einem oberen Ende (18) des Turms getragene Gondel (24) aufweist, wobei das Verfahren das Führen der Vielzahl von Kabeln zwischen dem Turm und der Gondel durch eine Vielzahl von jeweiligen Kabelrohren (42) umfasst, die an der Gondel montiert, aus Edelstahl hergestellt und konfiguriert sind, um das Gewicht des Kabels zu tragen, wobei die Rohre dazu dienen, die Kabel abzuschirmen und elektromagnetische Interferenz zwischen den Kabeln zu verhindern.

9. Verfahren nach Anspruch 8, umfassend das Einführen eines länglichen Elements durch das Kabelrohr, sodass ein erstes Ende des länglichen Elements von einem ersten Ende des Kabelrohrs vorsteht; Befestigen eines Endes des Kabels an dem vorstehenden ersten Ende des länglichen Elements; und Ziehen eines zweiten Endes des länglichen Elements, bis das erste Ende des Kabels aus einem zweiten Ende des Kabelrohrs auftaucht.

## Revendications

1. Éolienne comprenant :
une tour (10) ;
une nacelle (24) supportée à une extrémité supérieure (18) de la tour ; et
une pluralité de câbles (12) s'étendant à l'intérieur de la tour, chaque câble servant à raccorder un équipement à l'intérieur de la nacelle, avec un équipement situé en bas de la tour,
dans laquelle l'éolienne comprend en outre une pluralité de tubes de câbles (42) montés sur la nacelle, dans laquelle chaque câble est acheminé à travers un tube de câble respectif entre la tour et la nacelle, et chaque tube est réalisé en acier inoxydable et configuré pour supporter le poids de chaque câble, dans lequel les tubes servent à protéger les câbles et à empêcher les interférences électromagnétiques entre les câbles.

2. Éolienne selon la revendication 1, dans laquelle le tube de câble est monté sur une plaque de base de la nacelle.

3. Éolienne selon l'une quelconque des revendications précédentes, dans laquelle chaque tube de câble a une première section (90) sensiblement verticale incluant une extrémité d'entrée (86) à travers laquelle le câble respectif entre dans le tube depuis la tour et une seconde section (92) sensiblement horizontale montée sur la nacelle et incluant une extrémité de sortie (88) à travers laquelle le câble sort du tube au niveau de la nacelle.

4. Éolienne selon la revendication 3, dans laquelle chaque tube de câble est incurvé entre la première et la seconde sections et la seconde section de chaque tube de câble est en outre incurvée dans un plan sensiblement horizontal.

5. Éolienne selon la revendication 3 ou 4, dans laquelle les premières sections des tubes respectifs sont agencées autour d'un axe commun de sorte qu'ils soient équidistants dudit axe commun et régulièrement espacés les uns des autres.

6. Éolienne selon la revendication 3, 4 ou 5, dans laquelle les secondes sections des tubes respectifs sont agencées côte à côte sensiblement dans un plan horizontal.

7. Éolienne selon l'une quelconque des revendications précédentes, dans laquelle, dans une section inférieure de la tour, chaque câble est supporté par un ou plusieurs supports (32) qui se fixent à une paroi (30) de la tour au moyen d'une attraction magnétique.

8. Procédé d'installation d'une pluralité de câbles (12) dans une éolienne, l'éolienne ayant une tour (10) et une nacelle (24) supportées à une extrémité supérieure (18) de la tour, dans lequel le procédé comprend l'acheminement de la pluralité de câbles entre la tour et la nacelle à travers une pluralité de tubes de câble respectifs (42) montés sur la nacelle, réalisés en acier inoxydable et configurés pour supporter le poids du câble, dans lequel les tubes servent à protéger les câbles et à empêcher toute interférence électromagnétique entre les câbles.

9. Procédé selon la revendication 8, comprenant l'alimentation d'un élément allongé à travers le tube de câble, de sorte qu'une première extrémité de l'élément allongé ressorte d'une première extrémité du tube de câble ; la fixation d'une extrémité du câble à la première extrémité saillante de l'élément allongé ; et la traction d'une seconde extrémité de l'élément allongé jusqu'à ce que la première extrémité du câble émerge d'une seconde extrémité du tube de câble.
